(19) **Europäisches Patentamt**

**European Patent Office**

**Office européen des brevets**

(11) **EP 1 521 460 A1**

(12) **EUROPEAN PATENT APPLICATION**
published in accordance with Art. 158(3) EPC

(43) Date of publication:
**06.04.2005 Bulletin 2005/14**

(51) Int Cl.7: **H04N 5/91**

(21) Application number: **03741158.4**

(86) International application number:
**PCT/JP2003/008433**

(22) Date of filing: **02.07.2003**

(87) International publication number:
**WO 2004/008752 (22.01.2004 Gazette 2004/04)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **08.07.2002 JP 2002199073**

(71) Applicant: **Sony Corporation**
**Tokyo 141-0001 (JP)**

(72) Inventors:
• **HIMENO, Takuji**
**Shinagawa-ku, Tokyo 141-0001 (JP)**

• **ABE, Fumiyoshi**
**Shinagawa-ku, Tokyo 141-0001 (JP)**
• **TSUCHIDA, Hiroyasu**
**Shinagawa-ku, Tokyo 141-0001 (JP)**
• **YAMASAKI, Kenji**
**Shinagawa-ku, Tokyo 141-0001 (JP)**
• **KOUZAI, Toshinori**
**Shinagawa-ku, Tokyo 141-0001 (JP)**

(74) Representative:
**Robinson, Nigel Alexander Julian**
**D Young & Co**
**120 Holborn**
**London EC1N 2DY (GB)**

(54) **IMAGE DATA PROCESSING DEVICE AND METHOD**

(57) An image data processing method is provided to process image data encoded with the MPEG technique and including data groups (Pack_V) each having an auxiliary recording area (AUX_V) provided therein, led by an *I* or *P* picture and including a *B* picture. In the case of a recording medium having appended thereto an insertion data group (EditPack_V_h) including a copy picture and/or stuffing byte laid before a data group to be spliced in a first splicing, a second splicing is done with the insertion data group being separated and removed. In this second splicing, unnecessary stuffing and copy picture are removed, to thereby prevent degradation of image quality.

FIG.14

**Description**

Technical Field

The present invention relates to an image data processing apparatus and method, for recording image data encoded by the MPEG (Moving Picture Expert Group) technique to a recording medium.
This application claims the priority of the Japanese Patent Application No. 2002-199073 filed on July 8, 2002, the entirety of which is incorporated by reference herein.

Background Art

To compress a moving picture efficiently by coding, there have been proposed digital moving picture coding methods represented by MPEG-2 (ISO/IEC 13818). In this image compression with the MPEG-2 technique, a hybrid conversion including a combination of inter-image motion compensation and DCT (discrete cosine transform) is effected to make further quantization and variable-length coding of a signal resulted from the conversion.
The MPEG-2 technique adopts the bidirectional predictive coding technique to encode a moving picture. This bidirectional predictive coding technique includes three types of coding: intra-frame coding, inter-frame forward predictive coding, and bidirectional predictive coding. Moving pictures encoded by these types of bidirectional predictive coding techniques are called *I* (intra-coded), *P* (predicted) and *B* (bidirectionally coded) pictures, respectively. Also, *I, P* and *B* pictures are appropriately combined to form a GOP (group of pictures) structure as a random access code. It should be noted that here that generally *I* pictures are produced in largest number, *P* pictures are in a next largest number and the *B* pictures are in smallest number.
To provide an image by encoding a coded bit stream recorded to a recording medium accurately in a decoder at the time of reproduction with a coding method in which *I, P* and *B* pictures are produced in different numbers, respectively, such as the MPEG-2 technique, it is necessary to always know the data occupancy in an input buffer in the decoder by means of an encoder.

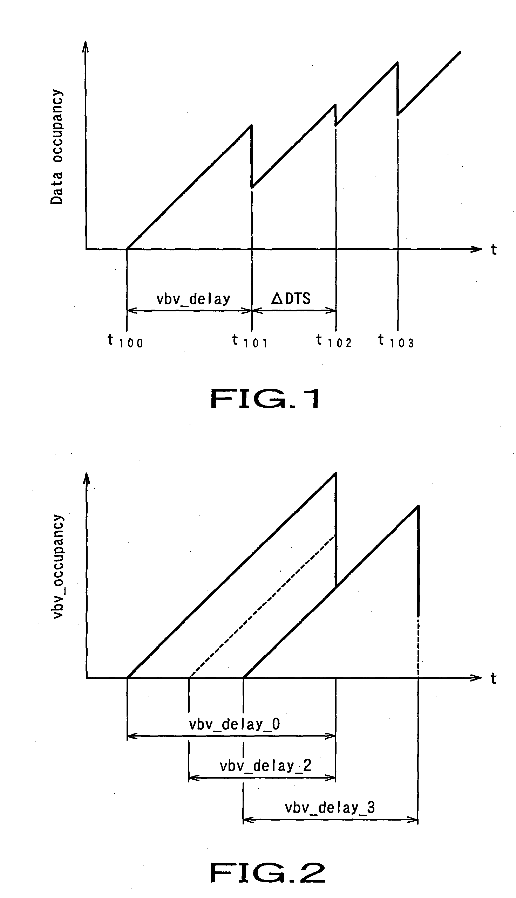

FIG. 1 shows a shift in data occupancy of an MPEG stream supplied to an input buffer of a decoder. In FIG. 1, a time (t) is indicated on the horizontal axis along which times (t101, t102, t103, ...) at which pictures included in the supplied MPEG stream to be decoded are shown, and data occupancy in the input buffer is indicated on the vertical axis.
The input buffer sequentially stores the MPEG streams compressed with the MPEG-2 technique at their respective bit rates. At the time t101 at which a VBV (video buffering verifier) delay (vbv_delay) has elapsed after a time t100 at which the MPEG streams have started being supplied, a first picture will be extracted from the decoder for decoding. The data amount of the picture extracted from the decoder is a sum of picture_size, picture_start_code, sequence_header and GOP_header of that picture. The data amount will be referred to as "image size" hereunder.
Note that also after the time t101, the input buffer will continuously be supplied with MPEG streams in sequence at a predetermined bit rate. Also, at the times t102, t103, ... elapsing at every ΔDTS (decode time stamp) after the time t101, data in each picture will be extracted in an amount corresponding to the image size of that picture will be extracted by the decoder. In such an input buffer, an overflow will arise when a difference in total data amount between the supplied MPEG streams and image size of the picture extracted at each ΔDTS is larger than the size of the input buffer, and an underflow will arise when the difference is smaller than that size.
On this account, when the MPEG technique is adopted, a VBV (video buffering verifier) buffer is assumed to be at the encoder to be a virtual buffer corresponding to the input buffer in the decoder in order to control the amount of code generation. At the encoder, the amount of data generation is so controlled for each picture type as not to cause any failure of the VBV buffer, that is, as not to cause data underflow or overflow the VBV buffer.
Note here that new image data is recorded starting at a recording end point on the recording medium such as a magnetic tape on which image data has already been recorded, namely, so-called image splicing is effected, in some cases. Also note that since the DV (digital video) VTR (video tape recorder) in which only intra-frame data is compressed records one frame over 10 tracks, so the splicing can easily be done by making switching from reproduction to recording while the tape is running and recording image data resulted from compression of a frame to be recorded starting at a next track.
However, with the MPEG-2 technique in which the intra-frame compression is used, it is not possible to record on a fixed number of recording tracks because the size of one frame varies. Therefore, the MPEG-2 technique is not capable of easy splicing.
FIG. 2 shows an example of shift in data occupancy of MPEG stream between points before and after an edition point on the recording medium in the above-mentioned related art. In FIG. 2, "VBV_delay_0" indicates a VBV delay just before a recording end point of image data already recorded on the recording medium, and "VBV_delay_2" indicates a VBV delay of an *I* picture positioned at the top of image data having undergone a first splicing. As shown in FIG. 2, in case "VBV_delay_2" is smaller than "VBV_delay_0", only a stuffing byte will be inserted without any copy picture. On the other hand, in case "VBV_delay_2" is larger than "VBV_delay_0", a copy picture and stuffing byte will be inserted.

However, when a second splicing is done to re-record other image data starting at an edition point on the recording medium on which a first splicing has been made, the following problems will arise.

First, in case only a stuffing byte is inserted because "VBV_delay_2" is smaller than "VBV_delay_0", the stuffing byte will be decoded with a video elementary stream (ES) just before the edition point. Thus, there will be no boundary between the stuffing byte and video ES on the recording medium. They will not be separable from each other later.

In case a second splicing is done taking, as an edition point, the top of an *I* picture of image data having undergone a first splicing and the VBV delay of the *I* picture positioned at the top of image data having undergone the second splicing is taken as "VBV_delay_3", this VBV delay is larger than "VBV_delay_2" and smaller than "VBV_deay_0" as shown in FIG. 2. On this account, although it will suffice to determine the amount of stuffing byte or the like by making a comparison between "VBV_delay_3" and "VBV_delay_0", a copy picture and stuffing byte will further be inserted while the stuffing byte already inserted between "VBV_delay_0" and "VBV_delay_2" because "VBV_delay_3" is larger than "VBV_delay_2" is being left as it is there. Therefore, the display will be held uselessly.

Likewise, also in case a copy picture and stuffing byte are inserted because "VBV_delay_2" is larger than "VBV_delay_0", although it will suffice to determine the amount of stuffing byte or the like to be inserted by making a comparison between "VBV_delay_3" and "VBV_delay_0" at the time of the second splicing, further stuffing byte will be inserted while there are being left a copy picture and stuffing byte not necessary for the relation between inserted "VBV_delay_2" and VBV_delay_0". Therefore, the display will be held uselessly.

Further, there has been proposed a method in which image data can be decoded for a second splicing by converting "VBV_delay_0" with which auxiliary data of the existent image data has been read from the recording medium into a data occupancy in the VBV buffer and setting the data occupancy as an initial value for the encoder, without any failure of the input buffer even if image data before and after an edition point where splicing is to be done are successively reproduced.

However, if any stuffing byte and copy picture which are useless in a relation with "VBV_delay_2", a read value of "VBV_delay_0" will be smaller, the quality of coded image data be lower, and display will be held uselessly.

Disclosure of the Invention

Accordingly, the present invention has an object to overcome the above-mentioned drawbacks of the related art by providing an improved and novel image data processing apparatus and method.

The present invention has another object to provide an image data processing apparatus and method, capable of removing unnecessary stuffing byte and copy picture for a second splicing to prevent the image quality from being degraded.

The above object can be attained by providing image data processing apparatus for processing image data encoded with the MPEG technique and including data groups (Pack_V) each having an auxiliary recording area (AUX_V) provided therein, led by an *I* or *P* picture and including a *B* picture, the apparatus including according to the present invention:

a recording means for recording a to-be-edited data group (Pack_V_h) at an edition point on a recording medium where the data groups (Pack_V) have already been recorded, and recording, to the recording medium, insertion data groups (EditPack_V_h) each having an insertion auxiliary recording area (EditAUX_V_h) provided therein before the data group (Pack_V_h) in response to a bit occupancy of a VBV (video buffering verifier) buffer used for decoding and including a copy picture repeatedly representing a previous picture and/or stuffing byte, the recording means recording, based on the edition point in case the insertion data group (EditPack_V_h) is already recorded at the edition point, insertion data groups (EditPack_V_n) located before a new input data group (Pack_V_n) independently of the insertion data group (EditPack_V_n), and each having an insertion auxiliary recording area (EditAUX_V_n) provided therein and including a copy picture and/or stuffing byte.

Also the above object can be attained by providing an image data processing method of processing image data encoded with the MPEG technique and including data groups (Pack_V) each having an auxiliary recording area (AUX_V) provided therein, led by an *I* or *P* picture and including a *B* picture, the method including according to the present invention:

a recording step of recording a to-be-edited data group (Pack_V_h) at an edition point on a recording medium where the data groups (Pack_V) have already been recorded, and recording, to the recording medium, insertion data groups (EditPack_V_h) each having an insertion auxiliary recording area (EditAUX_V_h) provided therein before the data group (Pack_V_h) in response to a bit occupancy of a VBV (video buffering verifier) buffer used for decoding and including a copy picture repeatedly representing a previous picture and/or stuffing byte,

in the recording step, there being recorded, based on the edition point in case the insertion data group (EditPack_V_h) is already recorded at the edition point, insertion data groups (EditPack_V_h) located before a new input data group (Pack_V_n) independently of the insertion data group (EditPack_V_n), and each having an insertion auxiliary recording area (AditAUX_V_n) provided therein and including a copy picture and/or stuffing byte.

These objects and other objects, features and advantages of the present invention will become more apparent from the following detailed description of the best mode for carrying out the present invention when taken in conjunction with the accompanying drawings.

Brief Description of the Drawings

FIG. 1 shows a shift in data occupancy of an MPEG stream supplied to an input buffer of a decoder.
FIG. 2 explains the problems of the related art.
FIG. 3 is a block diagram of the image data processor according to the present invention.
FIG. 4 is a plan view of a magnetic tape having a recording track formed thereon.
FIG. 5 shows the construction of a helical track formed on the magnetic tape.
FIG. 6 shows a data group.
FIG. 7 shows a shift in data occupancy of a data group supplied to the image data processor.
FIG. 8 explains an example of a pre-calculation effected for recording when a vbv_delay_n value of a next picture is unknown.
FIG. 9 explains operations of an ECC Bank memory in an ECC processor for splicing.
FIG. 10 shows a flow of operations made in controlling the amount of code generation in an encoder.
FIGS. 11A and 11B explain an example of continuous insertion of copy pictures when a vbv_occupancy_f value calculated on the basis of the vbv_delay_n value is smaller than a set one.
FIG. 12 explains an operation to be done when the vbv_delay_n value inherited when splicing data streams of image data supplied from another electronic device.
FIG. 13 explains the drawback of the splicing when a recording end point is followed by a *P* picture.
FIG. 14 explains how to record a calculated number of copy picture and amount of stuffing bytes.
FIG. 15 shows a relation of time vs. data occupancy in a VBV buffer for second splicing taking, as a re-recording start point, the top of a data group N1 having undergone a first splicing.
FIG. 16 explains addition of a PES header to only ES included in the stuffing byte.
FIG. 17 explains the re-recording start point for the second splicing.
FIG. 18 explains recording, to a magnetic tape, of both the copy picture and stuffing byte.

Best Mode for Carrying Out the Invention

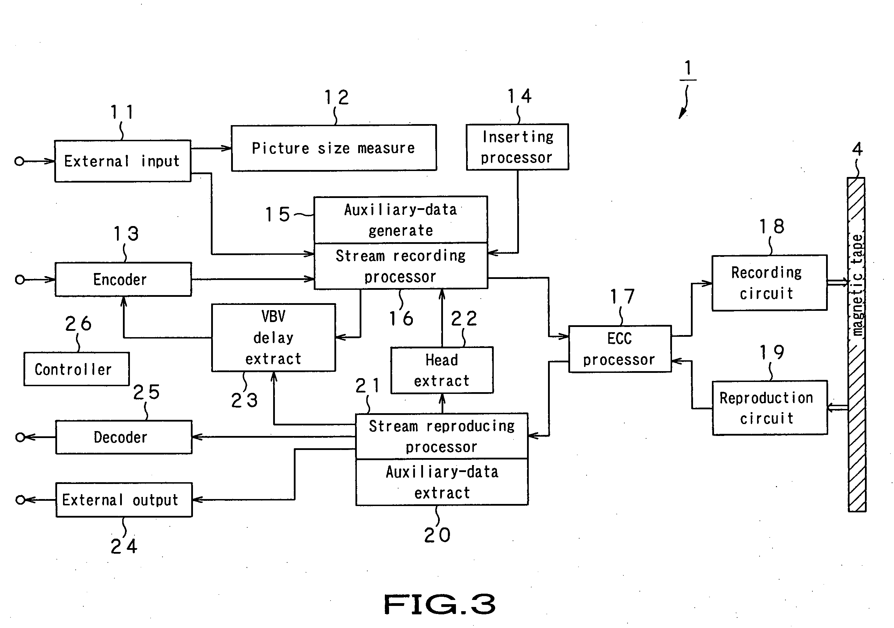

The present invention will be described in detail below concerning the embodiments of the image data processing apparatus and method with reference to the accompanying drawings.
Referring now to FIG. 3, there is schematically illustrated in the form of a block diagram an image data processor for encoding a moving picture into a digital moving picture for recording to a magnetic tape with the MPEG-2 (ISO/IEC 13818) technique with which a moving picture is compressed efficiently by coding. As shown, the image data processor, generally indicated with a reference 1, includes an external input unit 11, picture size measurement unit 12, encoder 13, inserting processor 14, auxiliary-data generator 15, stream recording processor 16, ECC (error correction code) processor 17, recording circuit 18, reproduction circuit 19, auxiliary-data extraction unit 20, stream reproducing processor 21, header extraction unit 22, VBV (video buffering verifier) display extraction unit 23, external output unit 24, decoder 25 and a controller 26.
The above external input unit 11 is supplied with image data sent as TSs (transport stream) from any other external apparatus, divides it into PESs (packetized elementary stream) and sends them to the stream recording processor 16. It should be noted here that the size of each picture included in image data supplied to the external input unit 11 is measured by the picture size measurement unit 12.
The above encoder 13 encodes image data supplied based on a VBV (video buffering verifier) delay sent from the VBV delay extraction unit 23 on the basis of encoding parameters including a picture type, quantization step, etc. The encoder 13 sends the encoded image data to the stream recording processor 16.
The above inserting processor 14 generates a copy picture repeatedly representing a previous picture and a stuffing byte as dummy data when the amount of code generation for encoding image data is small. It should be noted that the stuffing byte is data having no special meaning and it will be discarded at the decoder. The inserting processor 14 outputs the copy picture and stuffing byte thus generated to the stream recording processor 16.

The above auxiliary-data generator 15 outputs auxiliary data (AUX) appended to each data group led by an *I* or *P* picture and including *B* picture to the stream recording processor 16.

The stream recording processor 16 is supplied with image data from the external input unit 11 or encoder 13. Also, the stream recording processor 16 is supplied with a copy picture and stuffing byte from the inserting processor 14, and also with auxiliary data from the auxiliary-data generator 15 and various headers from the header extraction unit 22. The stream recording processor 16 inserts the auxiliary data, copy picture etc. between data groups beginning with an *I* or *P* picture, included in the image data, to generate one data stream. At this time, the stream recording processor 16 extracts a VBV delay by the VBV delay extraction unit 23 from the generated data stream as the case may be. The stream recording processor 16 sends the generated data stream to the ECC processor 17.

The ECC processor 17 appends an ECC (error correction code) to the input data stream and makes interleaving of the input data. The ECC processor 17 includes a unique ECC Bank memory (not shown) to temporarily store a data stream which is to actually be recorded to a magnetic tape 4.

The recording circuit 18 records the data stream supplied from the ECC processor 17 to the magnetic tape 4. The recording circuit 18 converts the input data into serial data, amplifies the serial data and records it by a magnetic head (not shown) to the magnetic tape 4 rotated by a rotating drum (not shown), for example.

The reproduction circuit 19 reproduces image data recorded on the magnetic tape 4, reads auxiliary data recorded in an auxiliary recording area on the magnetic tape 4, and sends the image data and auxiliary data to the ECC processor 17.

The stream reproducing processor 21 is supplied with the image data reproduced from the magnetic tape 4 and auxiliary data from the reproduction circuit 19 and ECC processor 17. The stream reproducing processor 21 outputs the input image data to the external output unit 24 or decoder 25. From the auxiliary data supplied to the stream reproducing processor 21, PTS (presentation time stamp) and DTS (decoding time stamp) are extracted by the header extraction circuit 22 and VBV delay is extracted by the VBV delay extraction unit 23. Other auxiliary data are extracted by the auxiliary-data extraction unit 20.

The external output unit 24 decodes image data supplied as PESs from the stream reproducing processor 21 to provide TSs (transport stream), and sends it to the other electronic device. The decoder 25 decodes the image data supplied as PESs from the stream reproducing processor 21 on the basis of encoding parameters including a picture type, quantization step, etc.

Note that circuit and elements included in the image data processor 1 according to the present invention operate under the control of the controller 26.

Recording to the magnetic tape 4 in the image data processor 1 according to the present invention is done as will be described below. It should be noted that the recording which will be described herein is based on the technique disclosed in the Japanese Patent Application Laid Open No. 2001-275077.

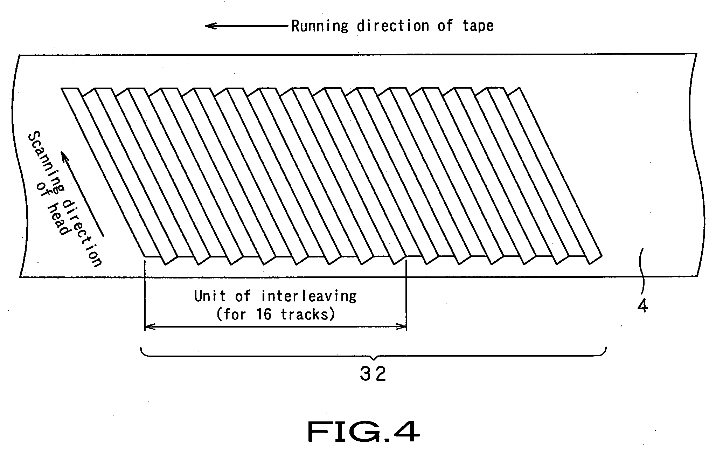

As shown in FIG. 4, the magnetic tape 4 has formed thereon helical tracks 32 to which information such as video signals or the like is recorded by a magnetic head.

The helical tracks 32 are formed oblique in relation to the length of the magnetic tape 4.

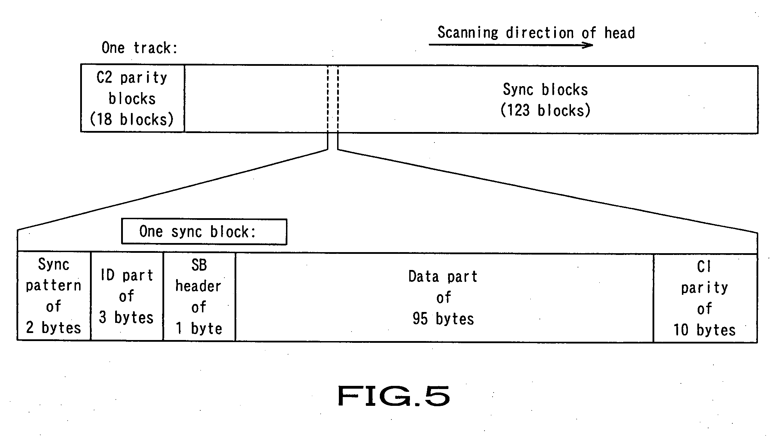

Each of the helical tracks 32 includes 123 sync blocks and 18 C2 parity sync blocks as shown in FIG. 5. Sixteen of the helical tracks 32 are taken as a unit of interleaving for C2ECC in the ECC processor 17. The ECC processor 17 assigns sync blocks in 16 helical tracks 32 to the ECC surface by interleaving to form a C2 parity, and records the C2 parity to the C2 parity sync block.

Each of the sync blocks includes a 2-byte sync pattern, 95-byte data part, 1-byte sync block header (SB header), 3-byte ID part including a track pair No., sync block No. etc., and a 10-byte CI parity for these preceding data in this order. Namely, each sync block is of 111 bytes.

The ones of the helical tracks 32, adjacent in the order of negative and positive azimuth, are identical in value to each other. A number resulted from addition of one for only a positive-azimuth track to a double of a track pair No. will be taken as a track No. Also, the SB header has recorded therein the type of data recorded to the sync block (SB).

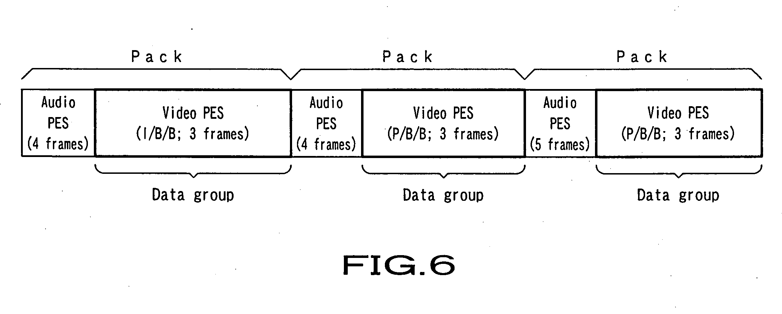

Note here that video and audio data formed as PES packets in the MPEG-2 technique are divided into sync blocks for recording. As shown in FIG. 6, the video data is a PES formed from a combination of three frames including an *I* picture and *B* pictures or including a *P* picture and *B* pictures. Audio data each corresponding to a PTS (presentation time stamp) and video data are recorded alternately in this order in a sync block. The unit of audio and video data in combination will be referred to as "Pack" hereunder. Video data formed from three frames including an *I* picture and *B* pictures or an *P* picture and *B* pictures in this order is called "data group).

Note here that an AUX-A sync block as auxiliary data for audio data and an AUX-V sync block as auxiliary data for video data are recorded in each Pack.

The image data processor 1 constructed as above according to the present invention functions as will be described below:

Since the amount of code generation is different from one picture type to another, the image data processor 1 using the MPEG-2 technique has to always monitor the data occupancy in the input buffer in the decoder 25 by the encoder 13 in order to provide an image by accurately encoding data stream recorded to the magnetic tape 4 at the decoder 25 at the time of data reproduction.

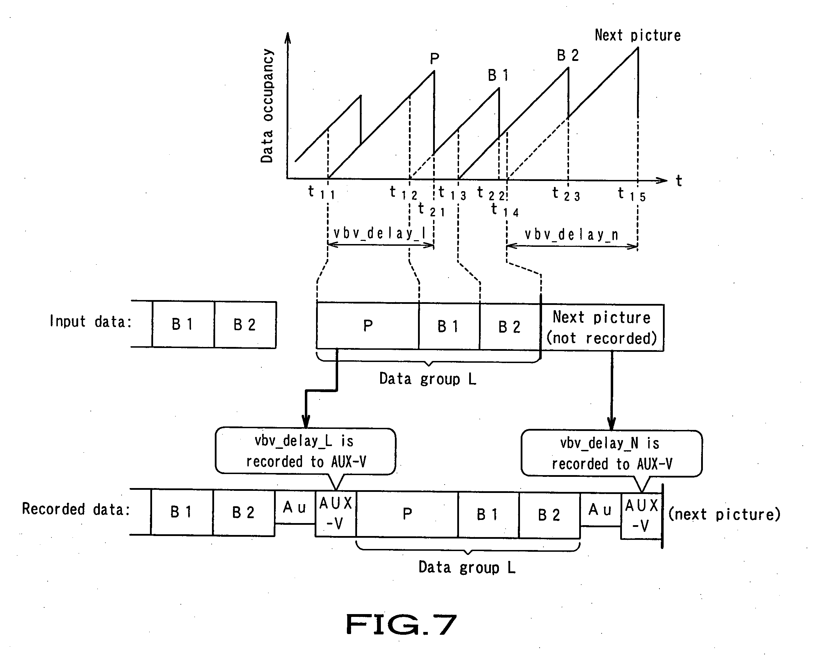

FIG. 7 shows a shift in data occupancy, in the input buffer of the decoder 25, of a last data group L supplied to the image data processor 1. In FIG. 7, the horizontal axis indicates a time (t), along which timings, at which pictures *P, B1* and *B2* included in the supplied data group L are decoded, are indicated. Also, the vertical axis indicates the data occupancy in the input buffer.

The input buffer sequentially stores data streams compressed by encoding with the MPEG-2 technique in response to their bit rates. *P* pictures are stored for a period from a time t11 to t12, B1 pictures are stored for a period from the time t12 to t13, and *B2* pictures are stored for a period from the time t13 to t14. The decoder 25 extracts a *P* picture at a time t21 for decoding. Similarly, the decoder 25 extracts a *B1* picture at a time t22 and a *B2* picture at a time t23 for decoding.

The data amount of each picture extracted by the decoder 25 is a sum of picture data size (picture_size), data size of a picture start code (picture_start_code), data size of a sequence header (sequence_header) and data size of GOP header (GOP_header). The data amount will be referred to as "image size" hereunder. A period from the time t11 to t21 for which pictures are extracted by the decoder 25 after a last byte of a picture start code of a *P* picture positioned at the top of the data group L is supplied will be referred to as "VBV delay (vbv_delay_1) hereunder.

As shown in FIG. 7, the data group L is followed by a picture which is to be inserted next to the data group L (will be referred to as "next picture" hereunder). The VBV delay (vbv_delay_n) of this next picture is a period from the time t14 to t15. When finally supplied with the data group L, the image data processor 1 can acquire a VBV delay (vbv_delay_n) of the next picture by encoding a slightly larger amount of data than necessary.

The image data processor 1 records the VBV delays (vbv_delay_1 and vbv_delay_n) that can thus be acquired, as auxiliary data, to an AUX-V sync block provided in each of the data groups. In the bottom portion of FIG. 7, there is shown a position on the magnetic tape 4 where an AUX-V sync block provided for the data group L and next picture is recorded. The position where the AUX-V sync block for the data group L is recorded is provided before a *P* picture positioned at the top of the data group L. Similarly, the AUX-V sync block for the next picture is provided before the position where the next picture is recorded and after the position where the data group L is recorded.

The image data recorder 1 records the vbv_delay_1 having been acquired for the *P* picture in the data group L to the AUX-V sync block provided for the data group L. Similarly, it records vbv_delay_n having been acquired for the next picture to the AUX-V sync block provided form the next picture.

By playing back the magnetic tape 4 having the above data stream recorded therein, it is possible to read vbv_delay_1 and vbv_delay_n recorded in the AUX-V sync blocks, respectively. Thus, the image data processor 1 can acquire existent image data even for recording new image data starting at the recording end position of the existent image data on the magnetic tape 4, namely, even for so-called splicing. It should be noted that image data having vbv_delay_1 or the like recorded therewith as above for image data which is to be spliced is called "priming image data".

More specifically, taking a next picture as image data to be spliced to predetermine vbv_delay_n the next picture should have, the image data processor 1 can record image data to the magnetic tape 4. Thus, since vbv_delay_n read from the magnetic tape 4 at the time of reproduction can be converted into a data occupancy in the VBV buffer and set as an initial value for the encoder, it is possible to control the amount of code generation for each picture even with the MPEG-2 technique in which the size of one frame varies and easily splice image data without any failure of the input buffer.

Note that in the image data processor 1 according to the present invention, it is also possible to record, to the AUX-V sync block, an end point flag for indicating that the data group L is a last supplied data group. Thus, in splicing image data, an area where image data is recorded based on the end point flag can easily be identified and overwrite on existent image data can be prevented.

The image data processor 1 may record the last supplied data group L and next picture as well as all other data groups to the AUX-V sync group provided for each of the data groups by identifying a VBV delay of a top picture in each data group. Since the AUX-V sync block of the next picture has also vbv_delay_n recorded therein, commonality in auxiliary-data type among all the AUX-V sync blocks provided on the recording medium can be achieved by recording the VBV delay to the AUX-V sync block for each picture.

Further, the image data processor 1 may use DTS or the like instead of a VBV delay as auxiliary data and record it to the AUX-V sync block. Of course, DTS or PTS may be used in place of a VBV delay.

If DTS or PST supplied from any other electronic device is recorded as it is to the AUX-V sync block, the recorded DTS or PTS will possibly jump at the time of reproduction. Normally, an offset value is added to DTS or PTS before recording to the AUX-V sync block. DTS acquired from AUX-V of the data group L is taken as "DTS0". Also, DTS acquired for a next picture to be spliced is taken as "DTS2". At this time, the offset value is calculated on the basis of a formula: DTS0 - DTS2 + (No. of copy pictures) $\times$ (display time of copy picture), and added to DTS or PTS before recording.

For aborting an encoded data stream or a data stream supplied from any other electronic device, the vbv_delay_n value of the next picture can be recognized. However, when the data stream supplied from the other electronic device has completely been recorded down to the last picture, no next picture exists. In such a case, it is not possible to recognize the vbv_delay_n value of the next picture, and record it as auxiliary data to the AUX-V sync block at the time of recording. On this account, for recording a picture supplied from the other electronic device to the magnetic tape 4, the vbv_delay_n value of a next picture is pre-calculated at the time of recording, and recorded to the AUX-V sync block of the next picture. Thus, the vbv_delay_n value of the next picture can easily be read out and splicing can easily be done without any failure of the input buffer.

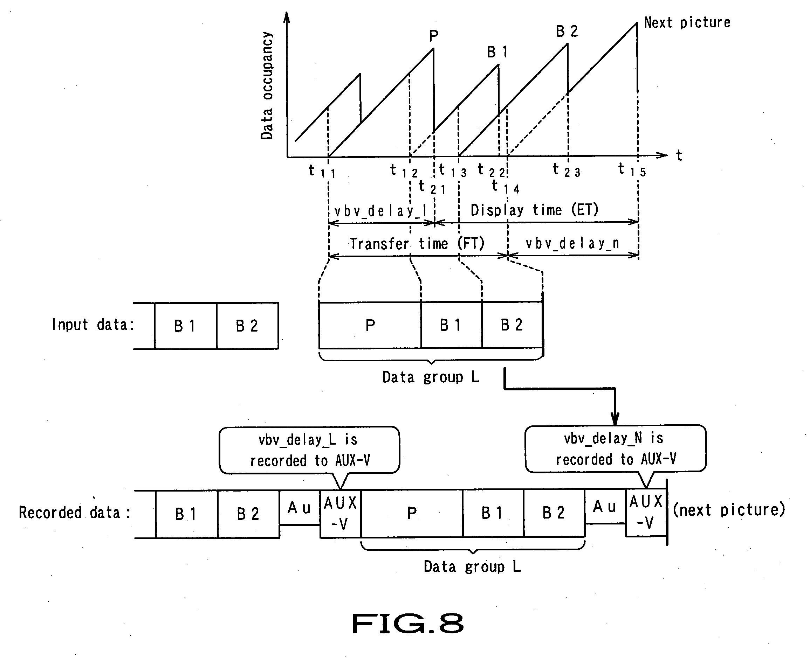

FIG. 8 explains an example of the pre-calculation effected for recording when the vbv_delay_n value of a next picture is unknown. The image data processor 1 is supplied with a data group L supplied finally and including a *P* picture, *B1* picture and *B2* picture. At this time, the image data processor 1 calculates the vbv_delay_n value of a picture to be supplied next to the last supplied data group L from vbv_delay_1 of the *P* picture at the top of the data group L and transfer time (FT) and display time (ET) of the data group L by the following equation (1):

$$vbv\_delay\_n = vbv\_delay\_1 + ET - FT \tag{1}$$

For the above transfer time FT, three frames forming the data group L are extracted to calculate a sum of number of bits ($\underline{d}$ bits). Then, the sum d is divided by a bit rate to provide a time required for the transfer, and the time thus obtained is multiplied by 90,000 to provide a transfer time (FT) on the time base of 90 kHz which is the same as that for the VBV delay. Also, the display time (ET) of the three frames included in the data group L is three times of 3003 when the frame rate is 29,97 Hz, and the difference between this display time (ET) and the above transfer time (FT) is a variation of the VBV delay. Thus, a vbv_delay_n value can be given by the following equation (2):

$$vbv\_delay\_n = vbv\_delay\_1 + 3000 \times 3 - 90000 \times d/bit\ rate \tag{2}$$

The image data processor 1 records the vbv_delay_n value thus determined to the AUX-V sync block of the next picture. The similar method can be used to predetermine DTS of a next picture in case a VBV delay is recorded to AUX-V as well as in case DTS is recorded to AUX-V.

As above, the image data processor 1 according to the present invention can determine a vbv_delay_n value of a next picture, even if it is unknown, based on the above equation (1) or (2). So, for obtaining an initial value for the encoder at the time of reproduction, it becomes unnecessary to read all existent image data just before the recording end position for calculation of a picture size. Thus, the image data processor 1 according to the present invention can make a calculation in a reduced time and thus shift to recording operation (REC) in a reduced time.

Next, the operation of the ECC Bank memory in the ECC processor 17 will be explained.

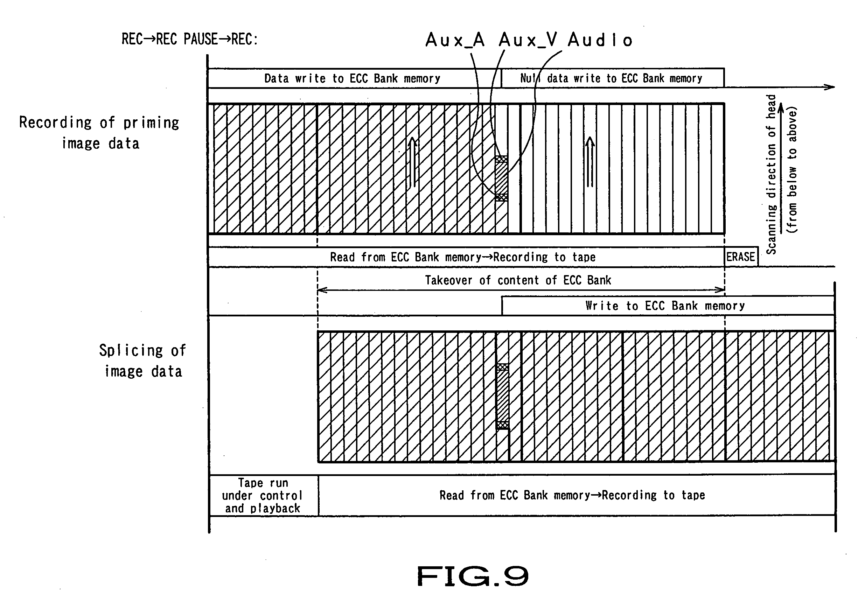

First, splicing by pausing a recording operation (REC) once (REC PAUSE) and making a recording operation (REC) again will be described. In case recording a data stream encoded by the encoder 13 or a data stream supplied via the external input unit 11 to the magnetic tape 4 is paused (REC PAUSE), a sync block when a data group L including last supplied three frame pictures is completely written to the ECC Bank is taken as a recording end point, and the AUX-A sync block of a Pack including a next picture to be spliced and sync block of audio data are written after the recording end point by making a recording operation (REC) again, as shown in FIG. 9. Finally, an AUX-V sync block to which auxiliary data such as vbv_delay_n of the next picture, END point flag, etc. are written.

The area extending from AUX-A to AUX-V as shown in FIG. 9 is an area when the auxiliary data starts being read and data stream to be spliced starts being written at the time of splicing. It should be noted that in case this area extends from the ECC Bank including the AUX-A sync block to a next ECC Bank, the sync block next to the AUX-V sync block of the next picture and subsequent sync blocks are filled with Null data in order to achieve commonality of the recording operations.

The ECC processor 17 records all supplied data stream to fill the ECC Bank necessary for generation of priming image data with a sync block or Null data, then stops supply of a recording current used for recording to the magnetic tape 4 and operation of a mechanism which records a data stream to the magnetic tape 4, such as a rotating drum and the like (not shown). This is intended for supply an excessive recording current since stopping of supply of a recording current just after recording data to a last helical track for recording to the magnetic tape 4 will possibly cause an error in the last helical track.

For splicing starting at a recording end point of priming image data on the magnetic tape 4, the magnetic tape 4 is first played back, the data stream of the existent priming image data is written once to the ECC Bank in the ECC processor 17 and an end point is searched in each of the AUX-V sync blocks. Only the ECC Bank including an AUX-V sync block having such an end point appended thereto and a next ECC Bank are stored in the ECC Bank memory, and further write to the ECC Bank memory is suspended for recording a next picture. At this time, the VBV delay, DTS or the like may be extracted from the AUX-V sync block having the end point flag appended thereto.

Next, there will be explained how to designate a re-recording position at which a next picture to be spliced starts being recorded while viewing an image reproduced from the magnetic tape 4. In the ECC Bank, data streams of an image displayed on the screen when the reproduction is paused have overwritten thereon data streams of an image supplied later in many cases.

According to the present invention, each data group including three frames is recorded to the magnetic tape 4. In case there exists an *I* or *P* picture in a position where a next picture designed by the user while viewing a reproduced image is to be re-recorded, the next picture is to be re-recorded just before the *I* or *P* picture. On the other hand, in case there exists a *B* picture in a position where a designed next picture is to be re-recorded, the next picture is to be recorded just before the *I* or *P* picture at the top of a data group including the *B* picture.

The ECC processor 17 determines a position where the next picture is to be re-recorded in response to a picture type existent in a designated recording position, rewinds the magnetic tape 4 to the determined recording position, and sequentially writes the re-recording positions thus determined to the ECC Bank memory. At this time, the determined re-recording position or a data group immediately following this re-recording position is searched for any *I* or *P* picture on the basis of DTS or the like, only an ECC Bank including AUX-A at the top of the Pack and a subsequent ECC Bank are stored into the ECC Bank memory, and write of subsequent ECC Bank to the ECC Bank memory is suspended for recording a next picture. Also at this time, a VBV delay, DTS or the like may be extracted from the AUX-V sync block in which an end point flag exists.

For splicing without viewing any image reproduced from the magnetic tape 4 and with selection of any re-recording position, the magnetic tape 4 is played back to write data streams one after another into the ECC Bank memory. At this time, each of the data groups is searched for a re-recording position in an order in which they are to be reproduced. Only an ECC Bank including AUX-A at the top of *I* or *P* picture of a data group just after an arbitrary re-recording position and a subsequent ECC Bank are stored in the ECC Bank memory, write of further ECC Banks to the ECC Bank memory is suspended for recording a next picture. Also at this time, a VBV delay, DTS or the like may be extracted from the AUX-V sync block in which an end point flag exists.

Note that in case two ECC Banks are stored in the ECC Bank memory as above, a new input data stream is returned from the ECC Bank as will be described below. That is, the data stream in the sync block just before the re-recording position is left as it is in the ECC Bank memory. A new input data stream is written over a sync block after the re-recording position and synthesized in the ECC Bank memory. At this time, for each of the data streams in the ECC Bank memory in which the new data stream is overwritten and synthesized, a C2 parity is re-generated.

Then, the magnetic tape 4 is played back while viewing the track No. of a data stream going to be reproduced, and splicing is made starting at a track whose number coincides with the track No. appended to the ECC Bank. That is, with data streams before and after a data stream to be returned are laid in succession on the magnetic tape 4, it is possible to smoothly reproduce the data streams without making any special operation at the re-recording position where the splicing is started.

Next, there will be explained how to take over vbv_delay_n of a next picture recorded in AUX-V and set it as an initial value for the encoder at the time of reproducing the magnetic tape 4 having the priming image data formed thereon as above.

At the time of reproducing, the image data processor 1 acquires vbv_delay_n of a next picture recorded in AUX-V, converts it into a data occupancy of the VBV buffer of the encoder 13, and sets a value thus obtained as an initial value of the encoder 13. The VBV buffer is provided as a virtual buffer corresponding to the input buffer in the decoder 25 in order to control the amount of code generation for each picture. The vbv_occupancy of the VBV buffer can be calculated by the following equation (3) on the basis of the taken-over vbv_delay_n:

$$vbv\_occupancy = vbv\_delay\_n \times bit\ rate/90000 \tag{3}$$

Note here that the vbv_occupancy given by the above equation (3) does not always take an optimum value but will possibly cause an underflow or overflow, whereby the image quality is continuously degraded. Thus, whatever value the vbv_occupancy given by the equation (3) takes, it is necessary to optimally control the vbv_occupancy in response to the capacity of the VBV buffer for prevention of any degradation in image quality.

By gradually correcting the vbv_occupancy beginning with the vbv_occupancy initial value (will be referred to as "vbv_occupancy_f" hereunder) calculated by the equation (3)), the image data processor 1 provides a shift from vbv_occupancy_f to an optimum target value of vbv_occupancy (will be referred to as "vbv_occupancy_t" hereunder). More specifically, the image data processor 1 determines a difference between vbv_occupancy_f and vbv_occupancy_t, to thereby determine a necessary corrected amount of code generation for convergence to vbv_occupancy_t. Then, the corrected amount of code generation is divided by a necessary number of GOPs (will be referred to as "number_GOP" hereunder) for transition to vbv_occupancy_t to determine a corrected amount of code generation per GOP. That is, the corrected amount of code generation can be calculated by the following equation (4):

Corrected amount of code generation

$$= (\text{vbv\_occupancy\_t} - \text{vbv\_occupancy\_f})/\text{number\_GOP} \tag{4}$$

As above, the image data processor 1 spends a plurality of GOPs for shift from vbv_occupancy_f to vbv_occupancy_t. That is, the amount of code generation can gradually be corrected by spending a plurality of GOPs (number_GOP) for shift to the target value vbv_occupancy_t, it is possible to reduce the amount of correction per GOP and thus prevent temporary image quality degradation.

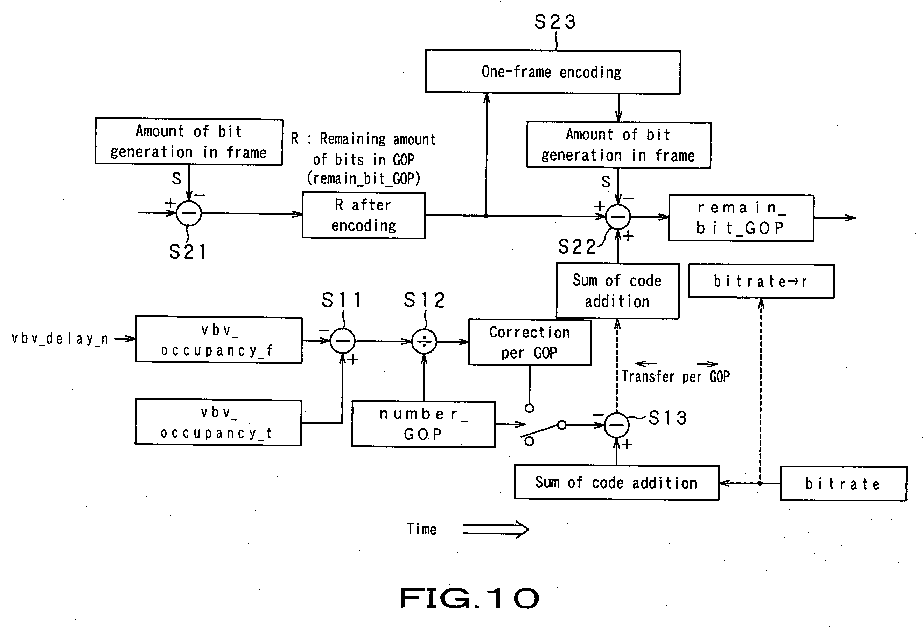

FIG. 10 shows a flow of operations made in controlling the amount of code generation in the encoder 13. In FIG. 10, the direction of arrow indicates the time base.

First in step S11, a difference between vbv_occupancy_f given by the equation (3) on the basis of vbv_delay_n, and vbv_occupancy_t is determined. Next in step S12, the difference is divided by number_GOP to determine a corrected amount of code generation per GOP. Then in step S13, a sum of code addition in each GOP controlled according to a bit rate is corrected by subtracting the corrected amount of code generation from the sum of code addition.

On the other hand, image data except for one at the top of GOP has the amount of code generation subtracted from remain_bit_GOP at each frame in step S21. In step S22, at the top of GOP, the sum of code addition corrected per GOP in step S13 is added to the code amount of each image data passing through step S21. Then in step S23, the intra-frame amount of code generation based on encoding of data in units of a frame is subtracted from the code amount of each image data. Thus, the encoder 13 can get remain_bit_GOP whose code amount has been controlled as above. Since the remain_bit_GOP has the code amount thereof controlled per GOP, the image quality will not be degraded continuously.

The number_GOP may be set to any value, fixed at a given value or set freely at each time in response to the result of vbv_occupancy_t - vbv_occupancy_f. On the assumption that number_GOP is fixed at a given value, it can be assigned uniformly to each GOP irrespective of the result of vbv_occupancy_t - vbv_occupancy_f. Also, by setting number_GOP freely at each time in response to the result of vbv_occupancy_t - vbv_occupancy_f, it is possible to first determine an amount of correction per GOP and then set a necessary number_GOP.

The image data processor 1 assigns the above-mentioned remain_bit_GOP to each picture. At this time, the assigned amount of code may be varied in response to the complexity of each picture type.

For example, on the assumption that a coefficient representative of the complexity of *I* picture is Xi, coefficient representative of the complexity of *P* picture is Xp, coefficient representative of the complexity of *B* picture is Xb, number of yet-to-be-encoded *P* pictures in GOP is Np and the number of yet-to-be-encoded *B* pictures in GOP is Nb, a coefficient Y_i assigned to the *I* picture, coefficient Y_p assigned to the *P* picture and a coefficient Y_b assigned to the *B* picture can be expressed by the following equations (5), (6) and (7), respectively:

$$Y\_i = 1 + Np \cdot Xp/Xi \cdot 1/Kp + Nb \cdot Xb/Xi \cdot 1/Kb \tag{5}$$

$$Y\_p = Np + Nb \cdot Xb/Kp \cdot Kp/Kb \tag{6}$$

$$Y\_b = Nb + Np \cdot Xp/Xb \cdot Kb/Kp \tag{7}$$

where Kp = 1.0 and Kb = 1.4

Note here that by dividing remain_bit_GOP by the coefficients Y_i, Y_p and Y_b assigned to the *I, P* and *B* pictures, respectively, determined as above, it is possible to determine a code amount to be assigned to each picture. Also note that the initial value of each of Xi, Xp and Xb may be 1.39 × bit rate, 0.52 × bit rate and 0.37 × bit rate, respectively.

Next, there will be explained operations to be done when the value of vbv_occupancy_f calculated based on the taken-over vbv_delay_n is extremely small.

If the value of vbv_occupancy_f calculated by the aforementioned equation (3) is extremely small, the image quality will considerably be degraded for the following reasons even if the value is shifted to vbv_occupancy_t on the basis of the equation (4).

If vbv_occupancy_f is extremely small because of the relation with an amount of code generation of a next picture to be spliced, the amount of code generation of the next picture will be limited for no underflow of the VBV buffer at the time of encoding and thus the image quality will be degraded. In such a case, if number_GOP is fixed at a given value, some first GOPs have extremely low vbv_occupancy until vbv_occupancy_t is reached. So, the image quality will considerably be degraded and a long time will be taken until an optimum vbv_occupancy_t is reached. Therefore, the image quality cannot be improved soon. Further, if the corrected amount of code generation per GOP is increased to shorten the time for shift to vbv_occupancy_t, the image quality will considerably be degraded for a time until vbv_occupancy_t is reached.

On this account, the image data processor 1 according to the present invention is adapted to select image holding rather than a considerable degradation of image quality by inserting a copy picture when vbv_occupancy_f calculated by the equation (3) is smaller than a preset value in order to prevent the above image-quality degradation.

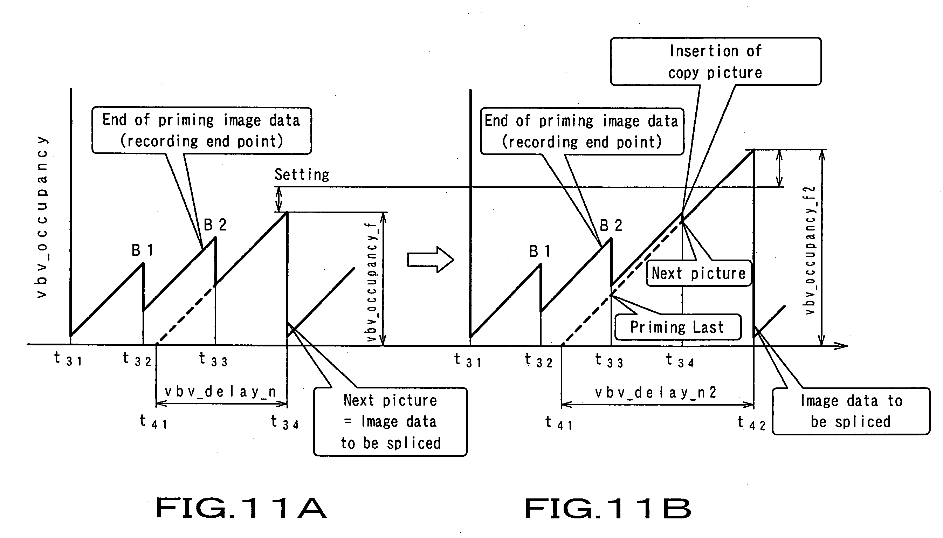

In case vbv_occupancy_f calculated based on vbv_delay_n is smaller than a set value as shown in FIG. 11A, copy pictures are continuously inserted as shown in FIG. 11B. Thus, the VBV delay (vbv_delay_n2) appears to be large since it corresponds to a time period from a time t41 to t42, and vbv_occupancy_f2 calculated based on the VBV delay will be larger than the set value. Thus, the screen will be held for a longer time, but the image quality can be prevented from being degraded.

Note that the number of inserted copy pictures (N) is determined, by calculation, so that vbv_occupancy_f2 obtained in response to vbv_delay_n2 of a next picture is larger than the set value.

First, when N copy pictures are inserted, the time t42 at which a next picture is extracted will be delayed a time corresponding to the N copy pictures and thus vbv_delay_n2 will be longer by the N copy pictures. On the other hand, the next picture will be shifted backward by N times of the transfer time FT for one copy picture, and thus vbv_delay_n2 will be shorter by a time corresponding to the N times of the transfer time FT.

On the assumption that the display time ET for one copy picture is ET, vbv_delay_n2 is given by the following equation (8):

$$\text{vbv\_delay\_n2} = \text{vbv\_delay\_n} + N \times (ET - FT) \qquad (8)$$

Note that the display time ET of a copy picture is 3003 when the frame frequency is 29.97 Hz, and 3600 when the frame frequency is 25 Hz. [96]

The number (N) of copy pictures is determined, by calculation, so that vbv_delay_n2 is larger than a set value (vbv_delay_s) for vbv_delay calculated by the equation (3) from the set value of vbv_occupancy. That is, the following formula (9) can be derived from the aforementioned equation (8):

$$\text{vbv\_delay\_n} + N \times (ET - FT) \geq \text{vbv\_delay\_s} \qquad (9)$$

The number (N) of copy pictures is given by the following formula (10) resulted from deformation of the formula (9):

$$N \geq (\text{vbv\_delay\_s} - \text{vbv\_delay\_n})/(ET - FT) \qquad (10)$$

In the image data processor 1 according to the present invention, vbv_delay_n2 can be obtained by inserting N copy pictures calculated as above, and converted into a data occupancy in the VBV buffer. The data occupancy thus obtained can be taken as an initial value for the encoder. Thus, even if vbv_occupancy_f calculated by the equation (3) is extremely small, vbv_occupancy can optimally be controlled without any considerable degradation of image quality.

Next, there will be explained operations to be done when splicing data streams of image data supplied from any other electronic device when the taken-over vbv_delay_n value is extremely small.

For splicing data streams supplied from the other electronic device, vbv_occupancy is controlled by inserting stuffing bytes in addition to copy pictures.

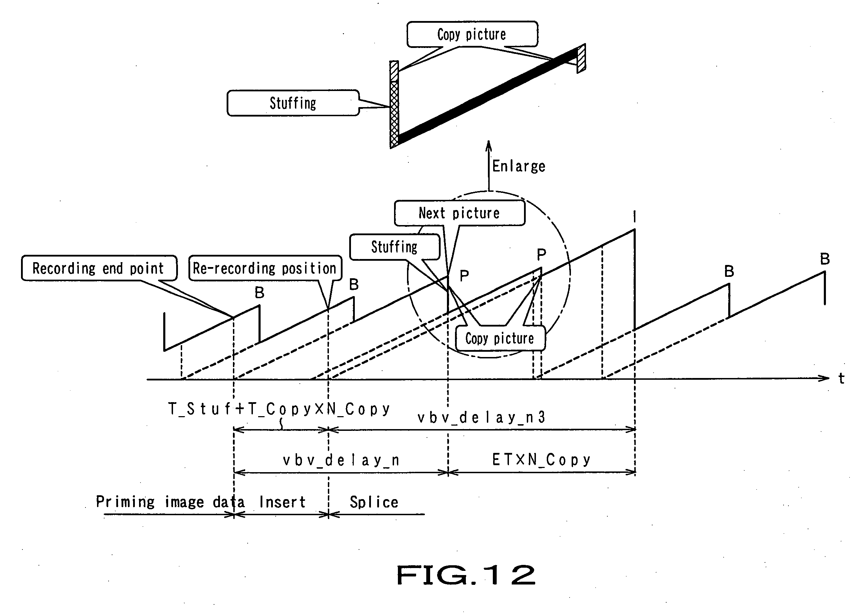

In case vbv_occupancy_f calculated based on vbv_delay_n is smaller than a set value, copy pictures and stuffing bytes are inserted for a period from a time t51 to t52 and stuffing bytes as shown in FIG. 12.

The number of copy pictures and amount of stuffing bytes can be determined as will be described below:

First, vbv_delay_n is acquired from AUX-V of a next picture positioned just after a recording end point. Next, when image data to be spliced is supplied from the other electronic device, a VBV delay is acquired from the header of an *I* picture positioned at the top of the supplied image data and taken as vbv_delay_n3. Also, a bit rate represented in units of 400 bps is acquired from the header of the next picture.

At this time, on the assumption that the number of bytes of the copy picture is B_copy, T_copy resulted from conversion of the transfer time of the copy picture into units of 90 kHz can be given by the following equation (11):

$$T\_copy = B\_copy/bit\ rate \times Conversion\ factor \tag{11}$$

where the "conversion factor" is 1800 as given by the following equation (12) when the transfer time is converted in units of 90 kHz:

$$90000\ Hz \times 8\ bits/400\ bps = 1800 \tag{12}$$

The difference (VBVD_TN) of the VBV delay acquired as above can be defined as given by the following equation (13):

$$VBVD\_TN = vbv\_delay\_n3 - vbv\_delay\_n \tag{13}$$

Note here that when VBVD_TN ≤ 0, the number of copy pictures (N_copy) is taken as 0 and only stuffing bytes are inserted. On the other hand, when VBVD_TN > 0, the number (N_copy), given by the following equation (14), of copy pictures is inserted. It should also be noted that in the equation (14), N_copy is rounded out to an integer:

$$N\_copy = VBVD\_TN/(ET - T\_copy) \tag{14}$$

The rounded-out portion in the equation (14) is complemented with stuffing bytes (B_Stuf) given by the following equations (15) and (16):

$$T\_Stuf = (ET - T\_copy) \times N - VBVD\_TN \tag{15}$$

$$B\_Stuf = T\_Stuf \times Bit\ rate/1800 \tag{16}$$

More particularly, when supplied with data streams from the other electronic device, the image data processor 1 according to the present invention can insert copy pictures or stuffing bytes in response to the acquired vbv_delay_n or vbv_delay_n3, respectively. Thus, since it is possible to insert copy pictures or stuffing bytes whatever value vbv_delay_n has in relation to vbv_delay_n3, it is possible to control the data occupancy to a desired vbv_occupancy with little degradation of image quality.

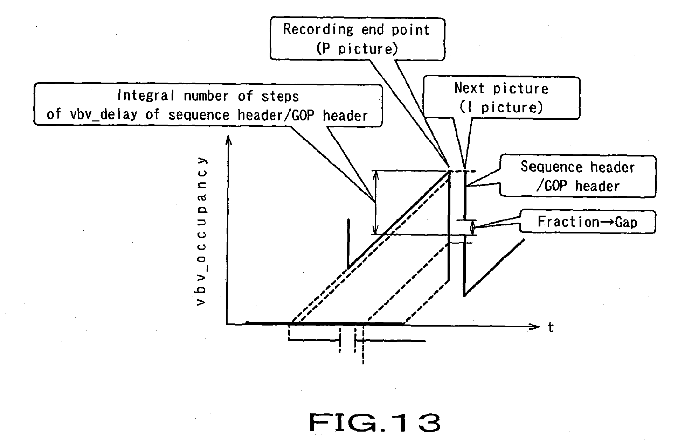

In case a picture just after the recording end point is a *P* picture and next pictures led by an *I* picture are spliced to this *P* picture, only the bit rate will be increased by the sequence header/GOP header as shown in FIG. 13. Therefore, it is necessary to subtract a VBV delay corresponding to the sequence header/GOP header as a value of correction from the determined vbv_delay_n.

Calculation of this correction value is made in an integral number of steps. If any fraction takes place in such a calculation, the bit rate is increased by the sequence header/GOP header by rounding out the fraction. The correction value thus calculated is used for calculation of the number of copy pictures and amount of stuffing bytes at the time of taking over vbv_delay_n of a next picture.

Next, how to record the calculated number of copy pictures and amount of stuffing bytes will be explained.

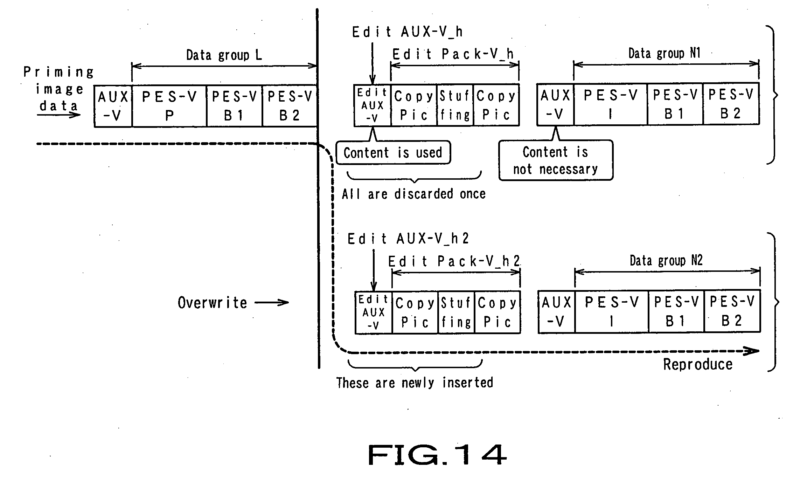

On the magnetic tape 4, there are already recorded data groups each having AUX-V provided therein, led by an *I* or *P* picture and including *B* picture as shown in FIG. 14. It should be noted that in FIG. 14, a data group L finally supplied to the image data processor 1 is shown as an example of priming image data.

In the re-recording position after the recording end point of the data group L, there will be recorded a data group N1 including a next picture going to be subjected to a first splicing. This data group N1 has also provided therein AUX-V for recording auxiliary data.

Further, between the data groups L and N1, there is provided an insertion auxiliary recording area (EditAUX_V_h) in which there will be recorded an insertion data group (EditPack_V_h) including a copy picture and/or stuffing byte. The insertion data group EditPack_V_h is provided in response to the bit occupancy of the VBV buffer.

The insertion data group EditPack_V_h including the copy picture and stuffing byte is recorded as a data group independent of the data groups L and N1. Thus, only the insertion data group EditPack_V_h can be separated depending upon the situation. A value corresponding to the VBV delay of the stuffing byte is recorded in the insertion auxiliary recording area EditAUX_V_h. At this time, vbv_delay_n recorded in AUX-V of the data group N1 may be taken over and recorded to EditAUX_V_h.

For re-recording another image data in a re-recording position on a recording medium where the first splicing has been done, namely, for making a second splicing, the insertion data group EditPack_V_h is separated for removal. Then, a second data group N2 to be spliced is recorded as shown in FIG. 14. This data group N2 has also provided therein AUX_V in which auxiliary data is to be recorded. Further, between the data groups L and N2, there is provided an insertion auxiliary recording area (EditAUX_V_h2) where an insertion data group (EditPack_V_h2) including a copy picture and/or stuffing byte is recorded.

By removing, in the second splicing, the insertion auxiliary data group EditPack_V_h having been recorded in the first splicing, the effect can be assured as will be described below:

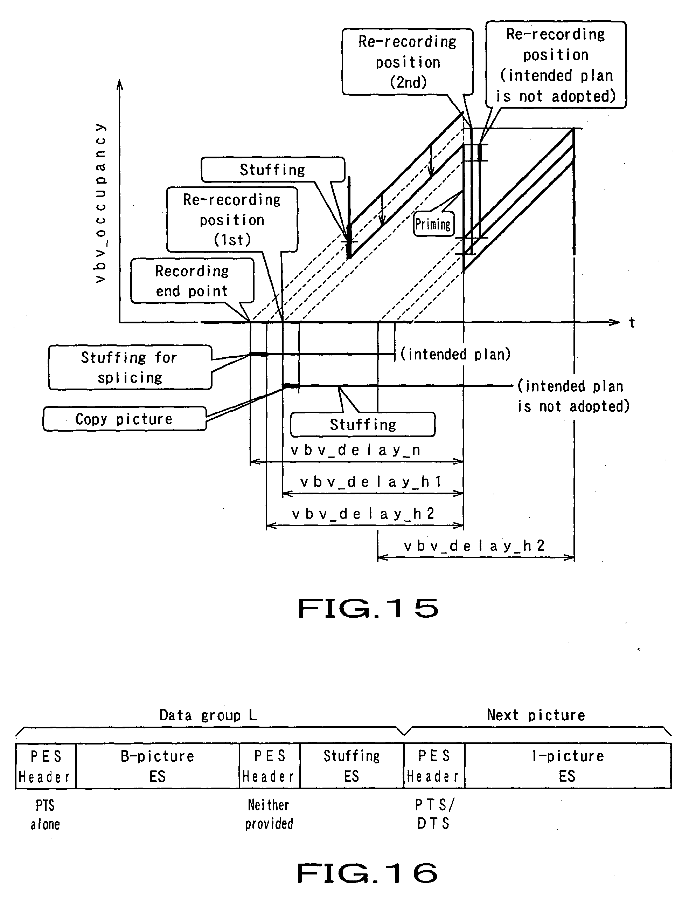

FIG. 15 shows a relation of time vs. data occupancy in the VBV buffer for the second splicing taking, as a re-recording start point, the top of a data group N1 having undergone the first splicing. As shown in FIG. 15, the VBV delay (vbv_delay_h2) of the data group N2 is larger than the VBV delay (vbv_delay_h1) of the data group N1, and smaller the VBV delay (vbv_delay_n) of the data group L. Therefore, although it will suffice to determine the number of copy pictures and amount of stuffing bytes, to be inserted, by making a comparison between vbv_delay_h2 and vbv_delay_n, an unnecessary stuffing byte or the like has already been recorded via the insertion data group (EditPack_V_h) because of the relation between vbv_delay_n and vbv_delay_h1 in the first splicing.

In the image data processor 1 according to the present invention, EditPack_V_h including the stuffing byte or the like for the first splicing has been removed before the data group N2 is supplied. Therefore, an amount of stuffing bytes to be inserted can be determined by making a comparison between vbv_delay_h2 and vbv_delay_n with disregarding vbv_delay_h1. Also, no unnecessary stuffing byte or the like will be recorded and any useless screen hold can be prevented.

On the other hand, also in case a copy picture and stuffing byte are inserted because vbv_delay_h1 is larger than vbv_delay_n, EditPack_V_h has been removed before the data group N2 is supplied. Therefore, the number of copy pictures and amount of stuffing bytes can be determined by making a comparison between vbv_delay_h2 and vbv_delay_n with disregarding vbv_delay_h1. Also, no unnecessary copy picture and stuffing byte or the like will be recorded and thus any useless screen hold can be prevented.

Note that in case EditPack_V_h1 is composed of only a stuffing byte, a PES header is appended to only ES included in the stuffing byte as shown in FIG. 16.

Thus, it becomes unnecessary to form an PES packet by combining ES forming only a stuffing byte with another ES and thus the boundary of the stuffing will be defined. Thus, it is possible at the time of decoding to easily remove a stuffing byte to which the PES header has been appended.

Next, there will be explained the re-recording position in the second splicing:

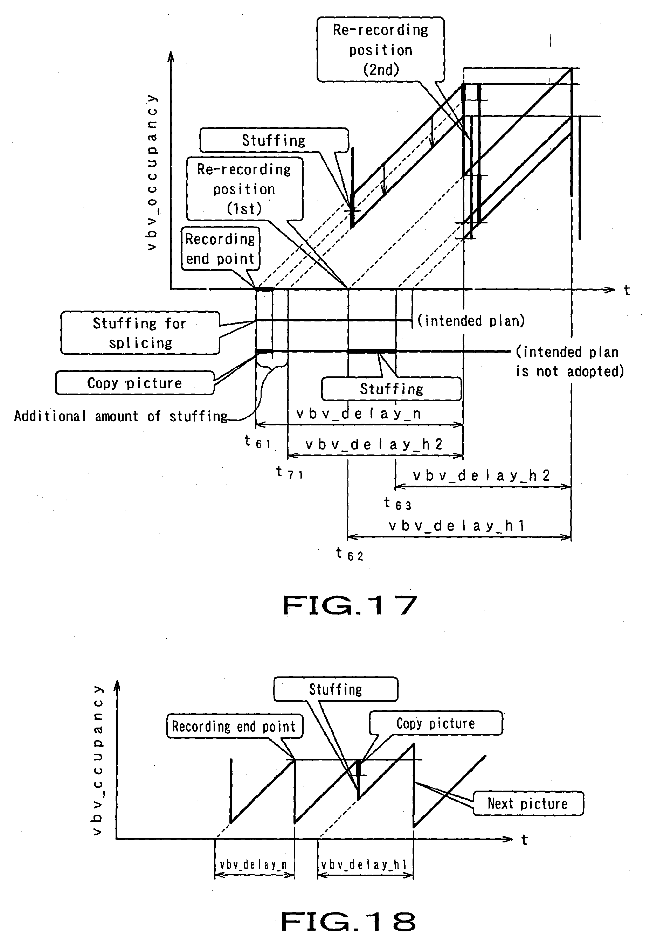

FIG. 17 shows vbv_delay_h1 starting at a time t62 with a copy picture and stuffing byte being inserted in relation to vbv_delay_n starting at a time t61. At this time, the second splicing is effected and vbv_delay_h2 having an additional stuffing byte appended thereto will start at a time t63 delayed by the additional stuffing byte from the time t62.

At this time, even if an accurate additional amount of stuffing bytes is determined by making a comparison between vbv_delay_h2 and vbv_delay_n, a useless screen hold for the stuffing byte or the like in EditPack_V_h having been removed in the second splicing will take place when the recording start position is the time t63. Therefore, according to the present invention, the recording start position in the second splicing is controlled to be a time t71 which is delayed by the additional amount of stuffing bytes from the time t61 when vbv_delay_n starts.

That is, EditPack_V_h having recorded therein the amount of stuffing bytes which is for the first splicing is removed once, a new additional amount of stuffing bytes is determined by making a comparison between vbv_delay_h2 and vbv_delay_n, and the amount of stuffing bytes thus determined is inserted before the next picture. Thus, it is possible to reduce useless screen hold.

Note that EditAUX_V_h may have recorded therein a copy picture identification flag and a flat for identification of the number of copy pictures.

Also note that in case both a copy picture and stuffing byte are to be recorded to the magnetic tape 4, the copy picture is first recorded, and then a stuffing byte is recorded after the copy picture, as shown in FIG. 18. Thus, it is possible to prevent any underflow.

In the foregoing, the present invention has been described in detail concerning certain preferred embodiments thereof as examples with reference to the accompanying drawings. However, it should be understood by those ordinarily skilled in the art that the present invention is not limited to the embodiments but can be modified in various manners, constructed alternatively or embodied in various other forms without departing from the scope and spirit thereof as set forth and defined in the appended claims.

Industrial Applicability

As having been described in the foregoing, the image data processing apparatus and method according to the present invention are free from recording of any unnecessary stuffing byte or the like and can prevent useless screen hold from taking place because EditPack_V_h recorded in the first splicing can be separated and removed.

**Claims**

1. An image data processing apparatus for processing image data encoded with the MPEG technique and including data groups (Pack_V) each having an auxiliary recording area (AUX_V) provided therein, led by an *I* or *P* picture and including a *B* picture, the apparatus comprising:

   a recording means for recording a to-be-edited data group (Pack_V_h) at an edition point on a recording medium where the data groups (Pack_V) have already been recorded, and recording, to the recording medium, insertion data groups (EditPack_V_h) each having an insertion auxiliary recording area (EditAUX_V_h) provided therein before the data group (Pack_V_h) in response to a bit occupancy of a VBV (video buffering verifier) buffer used for decoding and including a copy picture repeatedly representing a previous picture and/or stuffing byte,
   the recording means recording, based on the edition point in case the insertion data group (EditPack_V_h) is already recorded at the edition point, insertion data groups (EditPack_V_n) located before a new input data group (Pack_V_n) independently of the insertion data group (EditPack_V_n), and each having an insertion auxiliary recording area (EditAUX_V_n) provided therein and including a copy picture and/or stuffing byte.

2. The apparatus according to claim 1, wherein the recording means removes the insertion data group (EditPack_V_n) located before a new input data group (Pack_V_n) when recording the insertion data group EditPack_V_n at the edition point.

3. The apparatus according to claim 1, further comprising:

   a comparing means for reading, for comparison, a VBV delay (VBV_delay) recorded in the auxiliary recording area (AUX_V) and a VBV delay (VBV_delay_n) recorded in the insertion auxiliary recording area (EditAUX_V_n); and
   a controlling means for controlling the number of copy pictures or stuffing bytes included in the insertion data group (EditPack_V_n) in response to the result of comparison supplied from the comparing means.

4. The apparatus according to claim 1, wherein the recording means records the VBV delay (VBV_delay_n) based on the stuffing byte included in the insertion data group (EditPack_V_n) to the insertion auxiliary recording area (EditAUX_V_n).

5. The apparatus according to claim 1, wherein the recording means appends, in case the insertion data group (EditPack_V_h) is formed from only a stuffing byte, a PES header not including PTS and DTS to the stuffing byte.

6. The apparatus according to claim 1, wherein the recording means records, in case a copy picture is already existent on the recording medium, a flag for identification of the copy picture to the recording medium.

7. The apparatus according to claim 6, wherein the recording means takes the top of the copy picture as the edition point.

8. The apparatus according to claim 1, wherein the recording means inserts a stuffing byte after inserting a copy picture to the recording medium in case the insertion data group (EditPack_V_h) is formed from both a copy picture and stuffing byte, while inserting a stuffing byte after inserting a copy picture to the recording medium in case the insertion data group (EditPack_V_n) is formed from both a copy picture and stuffing byte.

9. An image data processing method of processing image data encoded with the MPEG technique and including data groups (Pack_V) each having an auxiliary recording area (AUX_V) provided therein, led by an *I* or *P* picture and including a *B* picture, the method comprising:

a recording step of recording a to-be-edited data group (Pack_V_h) at an edition point on a recording medium where the data groups (Pack_V) have already been recorded, and recording, to the recording medium, insertion data groups (EditPack_V_h) each having an insertion auxiliary recording area (EditAUX_V_h) provided therein before the data group (Pack_V_h) in response to a bit occupancy of a VBV (video buffering verifier) buffer used for decoding and including a copy picture repeatedly representing a previous picture and/or stuffing byte,

in the recording step, there being recorded, based on the edition point in case the insertion data group (EditPack_V_h) is already recorded at the edition point, insertion data groups (EditPack_V_h) located before a new input data group (Pack_V_n) independently of the insertion data group (EditPack_V_n), and each having an insertion auxiliary recording area (AditAUX_V_n) provided therein and including a copy picture and/or stuffing byte.

**10.** The method according to claim 9, wherein in the recording step, there is removed the insertion data group (EditPack_V_n) located before a new input data group (Pack_V_n) when recording the insertion data group EditPack_V_n at the edition point.

**11.** The method according to claim 9, further comprising steps of:

reading, for comparison, a VBV delay (VBV_delay) recorded in the auxiliary recording area (AUX_V) and a VBV delay (VBV_delay_n) recorded in the insertion auxiliary recording area (EditAUX_V_n); and controlling the number of copy pictures or stuffing bytes included in the insertion data group (EditPack_V_n) in response to the result of comparison supplied from the comparing means.

**12.** The method according to claim 9, wherein in the recording step, the VBV delay (VBV_delay_n) based on the stuffing byte included in the insertion data group (EditPack_V_n) is recorded to the insertion auxiliary recording area (EditAUX_V_n).

**13.** The method according to claim 9, wherein in the recording step, in case the insertion data group (EditPack_V_h) includes only a stuffing byte, a PES header not including PTS and DTS is appended to the stuffing byte.

**14.** The method according to claim 9, wherein in the recording step, in case a copy picture is already existent on the recording medium, a flag for identification of the copy picture is recorded to the recording medium.

**15.** The method according to claim 14, wherein in the recording step, the top of the copy picture is taken as the edition point.

**16.** The method according to claim 9, wherein:

in the recording step, there is inserted a stuffing byte after inserting a copy picture to the recording medium in case the insertion data group (EditPack_V_h) is formed from both a copy picture and stuffing byte; and there is inserted a stuffing byte after inserting a copy picture to the recording medium in case the insertion data group (EditPack_V_n) is formed from both a copy picture and stuffing byte.

FIG.1

FIG.2

FIG.3

EP 1 521 460 A1

Running direction of tape

Scanning direction of head

Unit of interleaving
(for 16 tracks)

4

32

FIG.4

One track:

| C2 parity blocks (18 blocks) | | | Sync blocks (123 blocks) |
|---|---|---|---|

One sync block:

| Sync pattern of 2 bytes | ID part of 3 bytes | SB header of 1 byte | Data part of 95 bytes | CI parity of 10 bytes |
|---|---|---|---|---|

FIG.5

EP 1 521 460 A1

| Pack | | Pack | | Pack | |
|---|---|---|---|---|---|
| Audio PES (4 frames) | Video PES (I/B/B; 3 frames) | Audio PES (4 frames) | Video PES (P/B/B; 3 frames) | Audio PES (5 frames) | Video PES (P/B/B; 3 frames) |
| | Data group | | Data group | | Data group |

FIG.6

EP 1 521 460 A1

Data occupancy

Next picture

P

B 2

B 1

$t_{11}$   $t_{12}$   $t_{13}$   $t_{22}$   $t_{23}$   $t_{15}$   t

$t_{21}$

$t_{14}$

vbv_delay_l

vbv_delay_n

| Input data: | B 1 | B 2 | | P | B 1 | B 2 | Next picture (not recorded) |
|---|---|---|---|---|---|---|---|

Data group L

vbv_delay_L is recorded to AUX-V

vbv_delay_N is recorded to AUX-V

| Recorded data: | B 1 | B 2 | A u | AUX -V | P | B 1 | B 2 | A u | AUX -V | (next picture) |
|---|---|---|---|---|---|---|---|---|---|---|

Data group L

# FIG.7

Data occupancy

P

B 1

B 2

Next picture

$t_{11}$  $t_{12}$  $t_{13}$  $t_{22}$  $t_{23}$  $t_{15}$  t

$t_{21}$  $t_{14}$

vbv_delay_l  Display time (ET)

Transfer time (FT)  vbv_delay_n

Input data:  B 1  B 2  P  B 1  B 2

Data group L

vbv_delay_L is
recorded to AUX-V

vbv_delay_N is
recorded to AUX-V

Recorded data:  B 1  B 2  A u  AUX -V  P  B 1  B 2  A u  AUX -V  (next picture)

Data group L

FIG.8

FIG.9

S23

One-frame encoding

| Amount of bit generation in frame | R : Remaining amount of bits in GOP (remain_bit_GOP) | | Amount of bit generation in frame |

S

+   −

S21

R after encoding

S

+   −

S22

+

remain_ bit_GOP

Sum of code addition

bitrate→r

vbv_delay_n →

vbv_ occupancy_f

−

S11

+

÷

S12

Correction per GOP

Transfer per GOP

vbv_ occupancy_t

number_ GOP

−

S13

+

Sum of code addition

bitrate

Time ⟹

FIG.10

FIG.11A

FIG.11B

Copy picture

Stuffing

Enlarge

Next picture

Stuffing

Recording end point    Re-recording position

B

B

P

P

B

B

Copy picture

t

T_Stuf+T_Copy×N_Copy

vbv_delay_n3

vbv_delay_n

ET×N_Copy

Priming image data    Insert    Splice

# FIG.12

FIG.13

FIG.14

EP 1 521 460 A1

Re-recording
position
(2nd)

Re-recording
position
(intended plan
is not adopted)

Stuffing

Re-recording
position
(1st)

Priming

Recording
end point

Stuffing for
splicing

(intended plan)

(intended plan
is not adopted)

Copy picture

Stuffing

vbv_delay_n

vbv_delay_h1

vbv_delay_h2

vbv_delay_h2

## FIG.15

| Data group L | | | | Next picture | |
|---|---|---|---|---|---|
| PES Header | B-picture ES | PES Header | Stuffing ES | PES Header | I-picture ES |
| PTS alone | | Neither provided | | PTS/ DTS | |

## FIG.16

Re-recording
position
(2nd)

Stuffing

Re-recording
position
(1st)

Recording
end point

vbv_occupancy

t

Stuffing for
splicing

(intended plan)

Copy picture

(intended plan
is not adopted)

Additional amount of stuffing

Stuffing

vbv_delay_n

$t_{61}$

vbv_delay_h2

$t_{71}$

vbv_delay_h2

$t_{63}$

vbv_delay_h1

$t_{62}$

# FIG.17

vbv_ccupancy

Stuffing

Recording end point

Copy picture

Next picture

t

vbv_delay_n

vbv_delay_h1

# FIG.18

29

## INTERNATIONAL SEARCH REPORT

| International application No. |
| --- |
| PCT/JP03/08433 |

A. CLASSIFICATION OF SUBJECT MATTER
Int.Cl$^7$  H04N5/91

According to International Patent Classification (IPC) or to both national classification and IPC

B. FIELDS SEARCHED

Minimum documentation searched (classification system followed by classification symbols)
Int.Cl$^7$  H04N5/76-5/956

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 11-205734 A  (Sony Corp.),<br>30 July, 1999 (30.07.99),<br>Full text; Figs. 1 to 18<br>& EP 930786 A2      & US 6345122 B1 | 1-16 |
| A | JP 2000-92448 A  (Pioneer Electronic Corp.),<br>31 March, 2000 (31.03.00),<br>Full text; Figs. 1 to 11<br>& CN 1249629 A      & EP 987895 A2 | 1-16 |
| A | JP 2001-275077 A  (Sony Corp.),<br>05 October, 2001 (05.10.01),<br>Full text; Figs. 1 to 14<br>& US 2001/36357 A1     & EP 1143746 A2 | 1-16 |

☐ Further documents are listed in the continuation of Box C.    ☐ See patent family annex.

| | |
| --- | --- |
| *    Special categories of cited documents:<br>"A"  document defining the general state of the art which is not<br>    considered to be of particular relevance<br>"E"  earlier document but published on or after the international filing<br>    date<br>"L"  document which may throw doubts on priority claim(s) or which is<br>    cited to establish the publication date of another citation or other<br>    special reason (as specified)<br>"O"  document referring to an oral disclosure, use, exhibition or other<br>    means<br>"P"  document published prior to the international filing date but later<br>    than the priority date claimed | "T"  later document published after the international filing date or<br>    priority date and not in conflict with the application but cited to<br>    understand the principle or theory underlying the invention<br>"X"  document of particular relevance; the claimed invention cannot be<br>    considered novel or cannot be considered to involve an inventive<br>    step when the document is taken alone<br>"Y"  document of particular relevance; the claimed invention cannot be<br>    considered to involve an inventive step when the document is<br>    combined with one or more other such documents, such<br>    combination being obvious to a person skilled in the art<br>"&"  document member of the same patent family |
| Date of the actual completion of the international search<br>  07 October, 2003 (07.10.03) | Date of mailing of the international search report<br>  28 October, 2003 (28.10.03) |
| Name and mailing address of the ISA/<br>  Japanese Patent Office | Authorized officer |
| Facsimile No. | Telephone No. |

Form PCT/ISA/210 (second sheet) (July 1998)